(19) Europäisches Patentamt
European Patent Office
Office européen des brevets

(11) **EP 4 181 064 A1**

(12) **EUROPEAN PATENT APPLICATION**

(43) Date of publication:
**17.05.2023 Bulletin 2023/20**

(21) Application number: **21208064.2**

(22) Date of filing: **12.11.2021**

(51) International Patent Classification (IPC):
**G06T 7/62** *(2017.01)*      **G06T 7/73** *(2017.01)*

(52) Cooperative Patent Classification (CPC):
**G06T 7/62; G06T 7/73;** G06T 2207/20084;
G06T 2207/30112

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SITA Information Networking
Computing UK Limited
Hayes, Middlesex UB3 1BW (GB)**

(72) Inventors:
• **LIU, Xiaoxiang
  Montreal QC, H3A 1G1 (CA)**

• **ISSON, Jean-Paul
  Montreal QC, H3A 1G1 (CA)**
• **MOKHAYYERI, Faniya
  Montreal QC, H3A 1G1 (CA)**
• **LIU, Adrian Sisum
  Middlesex, UB3 1BW (GB)**

(74) Representative: **Torrance, Bruce James
  Reddie & Grose LLP
  The White Chapel Building
  10 Whitechapel High Street
  London E1 8QS (GB)**

(54) **METHOD AND SYSTEM FOR MEASURING AN ARTICLE**

(57) There is provided a system and method for measuring the dimensions of an article. The system comprises a camera configured to obtain image data associated with an article, a neural network configured to identify a plurality of pixel locations in the image, and a processor configured to calculate 3D coordinates for each of the pixel locations, and further configured to determine the dimensions of the article based on the 3D coordinates.

EP 4 181 064 A1

FIG. 1

**Description**

TECHNICAL FIELD

This invention relates to the technical field of image processing. More particularly, this invention relates to a system, apparatus, method or computer program for measuring the dimensions of an article such as a bag belonging to a passenger.

BACKGROUND

A major issue in the air transport industry (ATI) is departure delays caused by an excessive amount of hand luggage (or "cabin baggage" or "carry-on baggage") being brought into the cabin of an aircraft. If passengers bring too many items of hand luggage into the cabin, or if those items are too large to be stored in the cabin, then the excess hand luggage must be transferred to the hold at the departure gate, which is time consuming and may result in departure delays.

Although the ATI industry recommends that carry-on baggage must conform to a size, weight and shape to fit under a passenger seat or in an enclosed storage compartment, there is no universal standard for the acceptable dimensions of carry-on baggage across different airlines. Indeed, even different seat classifications within the same aircraft will have different carry-on baggage allowances. In addition, baggage manufacturers often inaccurately quote the size of a particular bag or fail to include wheels or handles when stating measurements. Therefore, although items of luggage are often marked with indications such as "cabin approved" or "TSA approved", this is not a guarantee that every airline will accept the item of luggage in the cabin. It is also difficult for passengers and airport agents to prevent departure delays by accurately identifying whether a particular item of hand luggage should be stored in the hold of an aircraft during a journey. Additionally, there is no existing means of automating the measurement of carry-on baggage, so any inspection of the size of baggage must be done manually which is very time intensive.

Existing technologies seek to address the above problems by requiring manual user interaction, for example by manually identifying the corners of a bag, or by precisely manipulating a camera to generate point cloud data of the bag. US2020/0065988 A1 describes methods of measuring an object that involve identifying a set of feature points of the object (i.e. point cloud data) during an image data gathering phase. A 3D model of the object is then generated after the image data gathering phase based on the set of feature points. The generated model is measured with respect to a reference plane, which provides an indication of the measured size of the generated model.

However, systems such as those described above are unreliable and inaccurate. This is partially due to the final measurement being reliant on the accuracy of the inputs provided by the user: if the user inaccurately identifies the corners of a bag then the resulting measurement will not accurately capture the dimensions of the bag. The accuracy of the measurement is therefore highly dependent on the skill level of the user. The use of Artificial Reality (AR) based point cloud data is also problematic. This is because AR point cloud data indiscriminately identifies features within an image, which creates huge volumes of data that slows down the processing time for each image, creates high levels of random noise and inaccurate point capture.

These problems are inextricably linked to real-world images of baggage due to, for example, different textures, uneven surfaces, lighting conditions, and additional items shown within the image frame. These factors may cause an image processing system to falsely identify features of a bag that are not present, or fail to identify a sufficiently large number of points on the bag to enable an accurate size measurement to be determined. Additionally, it can be difficult to track the same feature - such as the handle of a bag - over multiple image frames because the use of point cloud data may result in the same feature migrating location between different image frames. The huge volume of information within the point cloud data also means that the computational burden of tracking the changing location of a particular feature is extremely high. This can lead to features being duplicated, or detected multiple times, which slows down the image processing time. Additionally, techniques requiring point cloud data rely on camera movement to accumulate the necessary data, and so are limited in applicability as they cannot be applied to CCTV images.

Some of the above problems may be addressed using more specialised, non-AR based, point cloud detection technologies, such as LIDAR, however these technologies are typically prohibitively expensive to acquire and operate, and so are not widely available to be able to be used industry-wide.

Accordingly, all of the above factors make the use of point cloud data unsuitable for accurately measuring the dimensions of an object by determining feature points with AR technology.

The present invention overcomes or ameliorates the above problems in the manner described below.

SUMMARY OF INVENTION

The invention is defined by the independent claims, to which reference should now be made. Preferred features are set out in the dependent claims.

Embodiments of the invention seek to address problems arising from oversized or excessive carry-on baggage by using artificial intelligence (AI) and augmented reality (AR) to automatically measure the dimensions (i.e. the height, width and depth) of a bag, which may be based on a single image of the bag. The invention may be implemented at certain key locations in a journey - such as during check-in and/or at a departure gate - in order to monitor baggage and determine whether certain items of baggage meet or exceed the permitted dimensions specified by the airline. In some embodiments, the invention may be implemented on a computer, for example when performed at check-in, or the invention may be implemented on a mobile phone, for example when performed at a departure gate.

According to a first embodiment there is provided a method for measuring the dimensions of an article, the method comprising obtaining image data associated with an article, identifying, based on the image data, a plurality of pixel locations associated with the article, each of the pixel locations corresponding to a respective corner of the article, calculating corresponding 3D coordinates for each of the pixel locations, and determining the dimensions of the article based on the 3D coordinates.

In one example the 3D coordinates are calculated using a Perspective-n-Point (PnP) algorithm based on camera calibration data.

In one example the dimensions of the article are determined based on a calculated scaling factor and the 3D coordinates.

In one example the scaling factor is calculated based on a predetermined height between the camera and the floor, a relative height of the article and a relative depth of the article.

In one example the relative height of the article and the relative depth of the article are determined based on the calculated 3D coordinates, wherein the height and depth of the article are relative to the width of the article.

In one example the PnP algorithm determines the pose of a camera that provides the image data based on calibration parameters of the camera.

In one example the plurality of pixel locations includes a pixel location associated with the centroid of the article.

Another example further comprises determining a plurality of corresponding 2D coordinates based on the calculated 3D coordinates.

Another example further comprises comparing the plurality of 2D coordinates with the plurality of pixel locations to determine an error.

Another example further comprises identifying a discrete range of acceptable values that define a relative height of the article and a relative depth of the article, wherein the height and depth of the article are relative to the width of the article.

In one example the discrete range of acceptable values that define the relative height and the relative depth of the article is determined by standard travel industry sizes for articles of baggage.

Another example further comprises determining a set of 3D coordinates for each possible combination for the relative height and relative depth of the article and determining a corresponding set of 2D coordinates for each set of 3D coordinates.

Another example further comprises identifying an optimum set of 3D coordinates based on a least-squares analysis of the error between the plurality of pixel locations and each set of 2D coordinates.

In one example the relative height and relative depth of the article associated with the optimum 3D coordinates are used as relative size parameters.

In one example the 3D coordinates are calculated using a ray-casting algorithm in an augmented reality environment.

In one example the dimensions of the article are determined by calculating the distance between 3D coordinates in the AR environment

In one example the ray-casting algorithm includes simultaneous localisation and mapping techniques.

In one example each of the pixel locations corresponds to a respective corner of the article.

Another example further comprises generating a bounding box based on the 3D coordinates.

In one example, the bounding box may be a cuboid defined by the 3D coordinates of the pixel locations, and the bounding box approximates the dimensions of the article.

In one example the image data is obtained from a single image of the article.

In one example each of the plurality of pixel locations is identified using a neural network.

In one example the article is a bag in an airport environment and the method further comprises calculating a volume of carry-on baggage based on the dimensions of one or more articles associated with checked-in passengers intending to board an aircraft, identifying the total cabin storage capacity of the aircraft, and comparing the volume of carry-on baggage with the total cabin storage capacity to identify a remaining cabin storage capacity for the aircraft.

Another embodiment further comprises sending a notification if the remaining cabin storage capacity falls below a threshold value.

Another embodiment further comprises a training phase wherein an annotation tool is used to train a neural network to identify the plurality of pixel locations associated with the article, wherein one or more of the pixel locations may be identified manually with the annotation tool.

In a second embodiment there is provided a system for measuring the dimensions of an article, the system comprising a camera configured to obtain image data associated with an article, a neural network configured to identify, based on the image data, a plurality of pixel locations associated with the article, each of the pixel locations corresponding to a respective corner of the article, and a processor configured to calculate corresponding 3D coordinates for each of the pixel locations, and further configured to determine the dimensions of the article based on the 3D coordinates.

In one example the location of the camera is fixed.

In one example the processor is implemented on an edge device.

In one example the camera and the processor are located on a mobile device.

Another example further comprises an airport operation database and common use terminal equipment system.

The above embodiments of the invention may provide the following benefits or advantages:

- integration with fixed location cameras, such as CCTV cameras;
- reduced reliance on camera movement compared to known techniques;
- being able to measure the size of a bag regardless of the viewpoint of the camera providing images of the bag;
- automatically measuring the size of the object without requiring any manual interaction from passengers or agents, which improves accuracy and provides a faster and more efficient system;
- automatically identifying oversized bags at check-in, thereby preventing boarding delays at the departure gate and generating additional revenue for airlines;
- determining the remaining on-board cabin storage capacity based on the detected volume of carry-on baggage for passengers who have already checked-in, which helps airport staff and cabin crew to proactively manage the cabin space and avoids departure delays by identifying when there is no more capacity for carry-on baggage;
- enabling subsequent "overflow" baggage to be placed in the aircraft hold at check-in, rather than at boarding, thereby preventing boarding delays at the departure gate; and
- enabling passengers to accurately measure their carry-on luggage automatically, before or during check-in, to determine whether their baggage conforms with airline requirements, which can prevent delays at check-in or boarding.

BRIEF DESCRIPTION OF THE DRAWINGS

Embodiments of the invention will now be described, by way of example only, with reference to the accompanying drawings, in which:

Figure 1 is a schematic diagram of an example workflow according to an embodiment of the invention;
Figure 2 shows a first example process according to an embodiment of the invention;
Figure 3 is a schematic diagram showing an example of the relative position and orientation of a camera, an article, and the ground;
Figure 4 is a schematic vector diagram corresponding to Figure 3;
Figure 5 shows a second example process according to an embodiment of the invention;
Figure 6 is a schematic diagram of an example architecture for a neural network used by embodiments of the invention;
Figure 7 shows example images from a training data set;
Figure 8 shows a third example process according to an embodiment of the invention;
Figure 9 shows an example annotated training image of an article; and
Figures 10A to 10H show an example graphical user interface (GUI) for a mobile application that implements embodiments of the invention.

DETAILED DESCRIPTION

The following exemplary description is based on a system, apparatus, and method for use in the aviation industry. However, it will be appreciated that the invention may find application outside the aviation industry in any context that requires remote or non-physical measurement of objects. This may include other transportation industries, such as shipping, cruises or trains, or delivery industries where items are transported between locations.

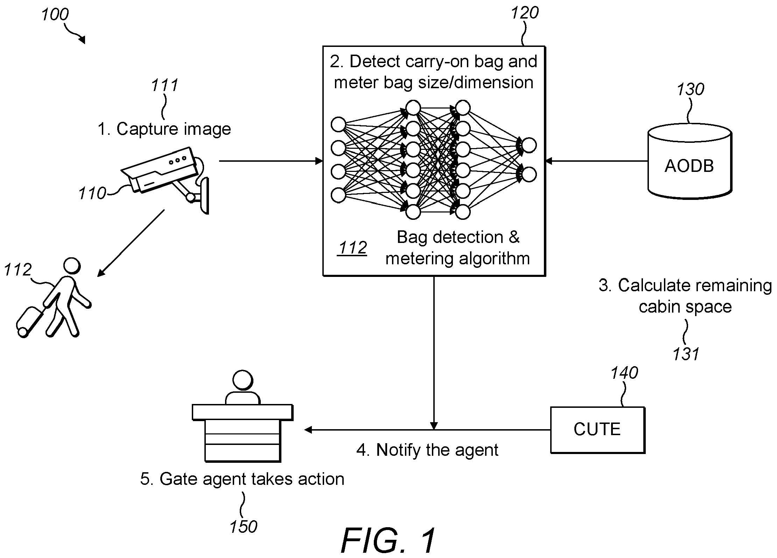

Figure 1 shows an example workflow 100 of an embodiment of the invention. First, a camera 110, such as a CCTV camera or a camera on a mobile phone, captures an image 111 of a bag or other item of luggage 112 belonging to a passenger. Embodiments of the invention may be configured to use images derived from fixed-height cameras (for example, CCTV footage), or images derived from mobile cameras (for example, images captured by mobile devices). The bag image 111 is then processed and analysed to determine the size of a bounding box that encloses the bag. The physical real-world dimensions of the bag 112 are then calculated based on the size of the bounding box as further described below. In preferred embodiments, the bounding box is generated using a monocular 3D bounding box detection technique which may be performed at an edge device 120. In embodiments that use images obtained from mobile devices, the processing and analysis of the bag image 111 may be performed on the mobile device rather than an edge device 120. The resulting bounding box includes the pixel locations of each corner (vertices) of the bounding box. In preferred embodiments, the bounding box approximates the dimensions of the article and is a cuboid defined by the 3D coordinates of the pixel locations.

A bag detection and metering algorithm 121, which may be implemented on the edge device or the mobile device, processes and analyses the bag image 111 to determine the dimensions of the bag 112 based on the pixel locations of the vertices. This is achieved by translating the pixel locations of the vertices and centroid (which are in two-dimensional pixel coordinates) into a set of three-dimensional coordinates and determining a scaling factor to resolve monocular scaling ambiguities. For fixed-height cameras, the scaling factor may be determined based on the known height between the camera and the floor, as further described below. For mobile cameras, the scaling factor may be determined using an augmented reality mobile application, as further described below.

Airport Operation Database (AODB) 130 is a central database or repository for all operative systems and may provide all flight-related data in real-time. For example, the AODB may provide the limitations of each aircraft arriving at a particular airport terminal such as the cabin space capacity of the particular aircraft. Accordingly, interfacing with the AODB 130 enables the system to calculate the remaining cabin space 131 based on the cabin space capacity for a particular aircraft at the airport terminal and the total amount of hand luggage or carry-on baggage that has been identified for passengers checked onto a flight on the particular aircraft.

Once the dimensions of the bag 112 have been calculated by the machine learning algorithm, the bag dimensions can be paired with passenger related information, which in some embodiments may be provided from Common Use Terminal Equipment (CUTE) systems 140 once a passenger has checked in for a flight. The CUTE system 140 can provide information indicating whether a particular passenger has checked in, and integrating with CUTE system 140 enables baggage information to be associated with passenger information.

All of this data - the bag dimensions, remaining cabin size, passenger related information, and any other pertinent data - may be integrated within an Application Programming Interface (API) which enables notifications 141 to be communicated between systems. This may, for example, enable the system to notify an airport agent 150 that the amount of remaining cabin space has fallen to below a particular threshold, such as 10% or 5% of the total cabin capacity. On receiving such a notification, the airport agent can then inform subsequent passengers checking in for the flight that their carry-on bags must be placed in the hold instead of being carried into the cabin. In preferred embodiments, on determining that a carry-on bag must be placed in the hold the system is further configured to provide a bag tag for the bag. The tagged bag may then be loaded into the hold of the aircraft. In addition, the API may be implemented on a bag measurement mobile application that enables passengers to check whether their bags comply with carry-on baggage regulations at any time.

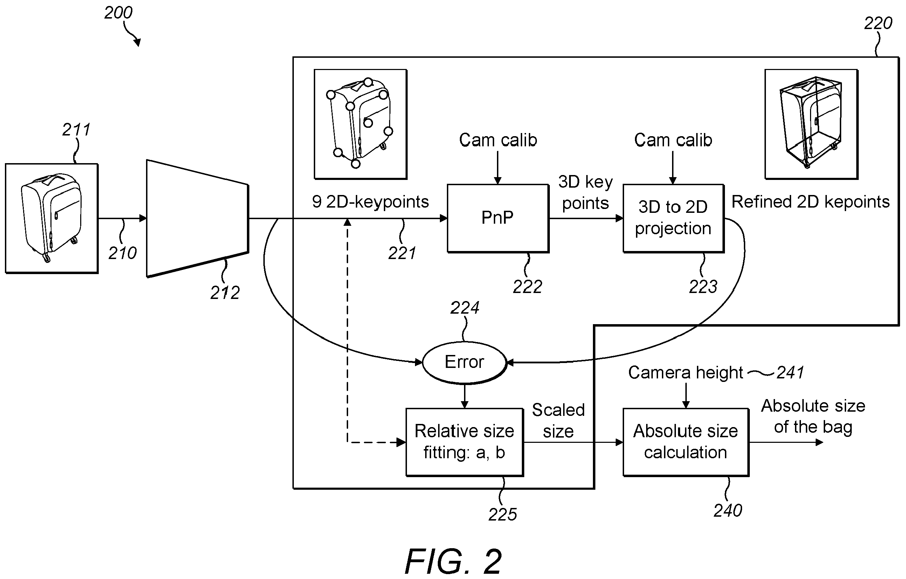

In some embodiments, the invention is implemented on an edge device. In such embodiments, image data is obtained via cameras that are a fixed height above the floor, such as CCTV cameras, and a scaling factor is determined based on the known floor-to-camera height in order to calculate the dimensions of a bag. An example process for calculating the dimensions of a bag using fixed-height cameras, such as CCTV cameras, is shown in Figures 2 to 4.

Figure 2 shows an example process 200 performed by a system to produce the absolute (i.e. real-world) dimensions of an article of baggage 112. In other words, in the context of this application the absolute dimensions of an article exactly match the dimensions of the actual article in absolute length values, such as feet, inches, meters, centimetres and/or millimetres. The absolute dimensions of an article will therefore be understood to be distinct from a set of scaled, or relative, dimensions, which may have the same proportionality as the dimensions of the actual article, but differ by a scaling factor.

In a first step 210, an image of a bag 211 is provided as an input image to a neural network 212. The neural network 212 identifies the bag within the bag image 211 and identifies 9 key points of the image by identifying the 2D pixel locations of each of the 8 vertices of the bag and the centroid of the bag.

In preferred embodiments, the system performs an iterative optimisation process 220 to identify the relative dimensions of the object based on the input image. In preferred embodiments, the optimisation process involves steps 221, 222, 223, 224 and 225 as described further below.

In step 221, the 2D pixel locations are converted to corresponding 3D coordinates for each of the 9 key points determined by the neural network 212 in order to determine a 3D bounding box, which may be used to calculate the relative dimensions of the bag. The advantage of using a 3D bounding box, as opposed to using conventional 2D object detection, is that the 3D bounding box of the present invention has 9 degrees of freedom: the width, height and length dimensions; the pitch, roll and yaw rotational directions, and the location of the centroid. By contrast, conventional 2D object detection can only consider 4 degrees of freedom. Providing more degrees of freedom advantageously enables the system to provide more accurate results.

In preferred embodiments, the 3D bounding box may be determined using a known Perspective-*n*-Point (PnP) algorithm 222 that calculates the position and orientation (i.e. the pose) of a camera based on the projected locations of *n* 3D points in a 2D image. Intrinsic information relating to camera calibration parameters, such as focal length, is also provided to the PnP algorithm to more accurately determine the 3D pixel locations.

The system may preferably determine a discrete range of acceptable values that the dimensions of the object may take. In some embodiments, this is achieved by determining a discretised acceptable range for both the relative depth and the relative height of the bag. The relative width may be normalised as unity and so the relative depth and relative height of the bag are expressed relative to the width of the bag. In some embodiments, the range of acceptable depth and height for a bag is based on industry standard bag sizes but, alternatively, the acceptable range may be determined by setting appropriate limits on the relative depth and height, for example the height dimension being no more than 10 times the depth dimension of the bag. In such embodiments, the PnP algorithm may determine a 3D bounding box based on the 9 key points determined by neural network 212 for each possible combination of the relative height and relative depth in the range determined above. Accordingly, the PnP algorithm outputs a plurality of bounding boxes based on the acceptable range of relative height and depth for the bag.

In step 223, the 3D pixel locations produced by the PnP algorithm are converted to 2D pixel locations in order to enable a comparison between the pixel locations derived by the PnP algorithm and the pixel locations derived by the neural network 212.

In step 224, the 2D pixel locations associated with each calculated 3D bounding box are compared with the original 2D pixel locations determined by the neural network 212 to determine an error for the calculated 3D coordinates. For embodiments where a plurality of 3D bounding boxes are generated, as described above, a comparison may be made to determine which of the plurality of bounding boxes most closely aligns with the original 2D pixel locations. This may be achieved using a least squares analysis whereby the set of 3D coordinates that provides the smallest output value from the least squares analysis is selected as the closest fit to the original 2D pixel locations.

In step 225, the relative height and relative depth are identified based on the optimum 3D coordinates associated with the bounding box that provides the least error, which acts as a proxy for the relative dimensions of the bag. Accordingly, the system determines the respective size parameters *a* and *b* corresponding to the relative height and depth of the bag. In preferred embodiments, the relative height and relative depth of the bag are normalised with respect to the width of the bag, which accordingly has a respective width parameter equal to 1. As for step 224, in some embodiments a comparison may be made between the respective size parameters *a* and *b* and the original 2D pixel locations to determine the accuracy of the calculated size parameters *a* and *b* compared to the original data.

An example pseudocode for an algorithm that performs the above iterative optimisation process is as follows:

Inputs:

$$a_{min}, a_{max}, b_{min}, b_{max}$$

$$F = (f_x, f_y, v, u),$$

$$x^{pixel\ coordinate} = x_1, y_1, x_2, y_2, x_3, y_3, x_4, y_4, x_5, y_5, x_6, y_6, x_7, y_7$$

===================================================

- $\Delta a = \dfrac{(a_{max} - a_{min})}{10}$

- $\Delta b = \dfrac{(b_{max} - b_{min})}{10}$

- $error_{min} = \infty$

- $a_{optim} = 1, \ b_{optim} = 1$

- $For\ a = a_{min}; \ a \leq a_{max} ; \ a += \Delta a$

  - $For\ b = b_{min}; \ b \leq b_{max} ; \ b += \Delta b$

    - $x^{3d} = PnP\ (x^{pixel\ coordinate}, F, a, b)$

    - $x^{pixel\ coordinate}_{modified} = 3Dto2DProjection\ (x^{3d}, F)$

    - $error = \ || x^{pixel\ coordinate} - x^{pixel\ coordinate}_{modified} \ ||$

    - $if\ error < error_{min}$

      - $error_{min} = error$

      - $a_{optim} = a, \ b_{optim} = b$

===================================================

Output:

$$a_{optim}, \ b_{optim}$$

Where $a = \dfrac{depth}{width}$ and is $b = \dfrac{height}{width}$

In the above pseudocode, $a_{max}$ and $a_{min}$ are the largest and smallest acceptable values of size parameter *a*, and $b_{max}$ and $b_{min}$ are the largest and smallest acceptable values of size parameter *b*. Accordingly, in steps 210 to 230 above the system is able to accurately determine the relative dimensions of a bag. However, due to the monocular scale ambiguity, the distance between coordinates will include a scaling error and so the above steps will not provide the dimensions of the bag.

Therefore, in a further step 240 the system calculates the absolute size of the baggage by resolving the monocular scale ambiguity by calculating a scaling factor based on the known and fixed camera height 241 of the camera 110 and the relative size parameters *a* and *b*.

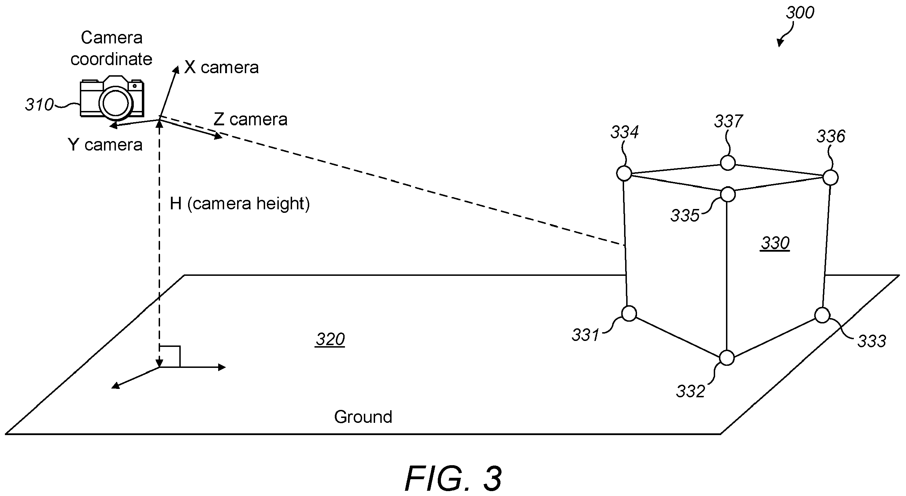

The absolute size of the bag is then calculated based on the scaling factor and the relative size parameters as further described below with reference to Figure 3.

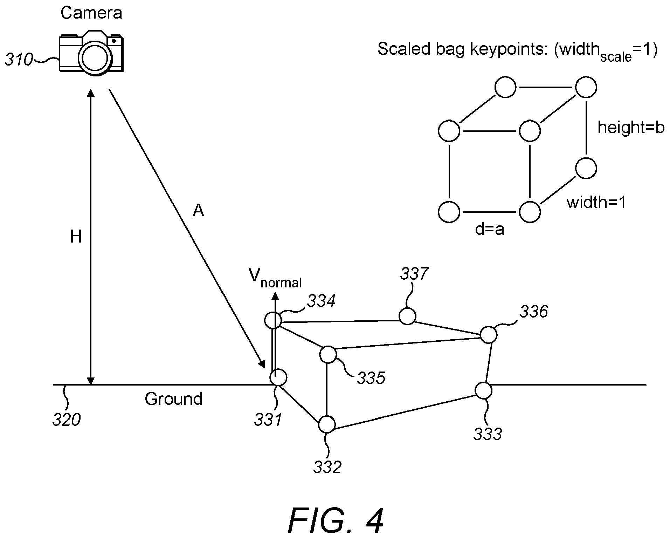

Figure 3 is a schematic diagram that shows a camera 310 that is a fixed height (H) above the floor 320, positioned at coordinates (x,y,z) and orientated such that images of a bag are captured by the camera 310. As described above, the bag is enclosed by a bounding box 330 identified by the machine learning algorithm. In the example shown in Figure 3, the bounding box has seven vertices 331-337 that are visible. When the bag is resting on the floor, as shown in Figure 3, four of the vertices of the bounding box are located on the ground. Three of these vertices 331, 332, and 333 are visible as shown in Figure 3. Vertices 334 to 337 are located at a height above the plane of the ground that is equal to the height of the bag. As indicated above, each vertex is associated with a corresponding 2D pixel location in an image of the bag captured by the camera 310. The process of translating these 2D pixel locations to 3D coordinates will be described with reference to Figure 4.

Figure 4 is a schematic diagram that shows the vectors between the camera, floor and bag shown in Figure 3. The features in Figure 4 that also appear in Figure 3 are given the same numerals. As shown in Figure 4, a first vector H extends vertically between the ground and the camera, a second vector A extends from the camera to one of the identified vertices located on the ground (vertex 331 in Figures 3 and 4), and a third vector $V_{normal}$, which is a unit vector, extends vertically from the identified vertex 331.

The scaled ground-to-camera height is calculated using the dot product of $V_{normal}$ and A:

$$H_{scaled} = (V_{normal}) \cdot (-A_{scaled})$$

Since the distance between the camera and the floor (i.e. the real height, $H_{real}$) is known, a scaling factor can be calculated by comparing the calculated vector length $H_{scaled}$ with the known ground-to-camera height $H_{real}$.

Assuming that the depth of the bounding box (for example, the displacement between vertices 331 and 332) is "a", the height of the bounding box (for example, the displacement between vertices 331 and 334) is "b" and the width of the bounding box is 1, then the real width, depth and height of the bag may be calculated using the following formulae:

$$width_{real} = width_{scale} * \frac{H_{real}}{H_{scale}}$$

$$width_{real} = \frac{H_{real}}{H_{scale}}$$

$$Scale = \frac{H_{real}}{H_{scale}}$$

$$depth_{real} = scale * a$$

$$height_{real} = scale * b$$

where a is a scaled depth, $\frac{depth}{width}$ and b is a scaled height $\frac{height}{width}$

In alternative embodiments, the invention may be implemented on a mobile device such as a cell phone. In such embodiments, image data is obtained via a camera module of the mobile device, and a scaling factor is determined using applications implemented on the mobile device in order to calculate the dimensions of a bag. In particular, AR applications are employed to overcome scale ambiguity by using known AR libraries, such as ARCore and ARKit.

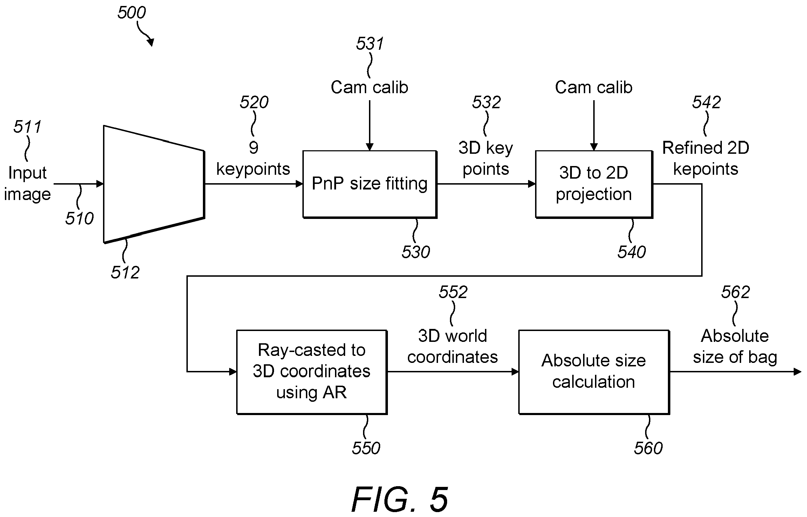

Figure 5 shows an example process 500 performed by a system to produce the dimensions of an article of baggage. As described above, in a first step 510 an image of a bag 511 is provided as an input image to a neural network 512. In a second step 520, the neural network 512 identifies the 2D pixel locations of each corner of the bag and the 2D pixel location of the centroid of the bag to produce 9 key points corresponding to the locations of the 8 corners and the centroid of the bag. In preferred embodiments, and as described above, in a third step 530 Perspective-n-Point size fitting techniques are employed to produce a set of 3D pixel locations 532 determined by the neural network 512 in the same manner as described above for Figure 2. In a fourth step, 540, the 3D pixel locations 532 produced by the PnP algorithm are converted to a set of refined 2D pixel locations 542. In a fifth step 550, the 8 key points corresponding to the 2D pixel locations 542 of the corners of the bag are ray-cast to 3D coordinates using known AR applications and AR libraries such as ARCore which use simultaneous localisation and mapping (SLAM) techniques.

This is achieved by first establishing a surface - usually the ground - on which the item of baggage is placed. The location of the ground surface may be determined using AR applications performing known techniques to track locations in the field of view of the camera to derive the relative distance and position of the device relative to those locations based on input data from the mobile device, such as data from sensors, accelerometers, magnetometers and gyroscopes and image data from the camera. This enables the AR library to generate a virtual surface that corresponds to a flat surface in the real world, such as the ground underneath a bag.

Once the virtual ground surface has been established, the 8 vertices of the bounding box are ray-cast with absolute scale. This is achieved by using the mobile application to project imaginary light rays from the calculated focal point of the camera to the ground plane through each pixel of the camera sensor. As the four bottom, or base, corners of the bag (331, 332 and 333 shown in Figure 4) rest on the ground plane, the 3D locations of these base corners 552 correspond to the points of intersection where rays passing through the pixel coordinates associated with these four base corners intersect with the ground plane. Each of the remaining four upper corners of the bag is assumed to lie perpendicular to a corresponding base corner and the ground plane. For example, upper corner 334 in Figure 4 lies perpendicular to ground plane 320 and base corner 331.

In some embodiments, the accuracy of the 3D locations of the base corners may be improved by using a limited amount of point cloud data, for example using a cluster of data points that define where a bag face starts may be used to make small adjustments to the calculated 3D co-ordinates by determining whether an extrapolated bag face plane would intersect with the calculated 3D co-ordinates, and adjusting the 3D co-ordinates accordingly.

The absolute size calculation 560 comprises determining the distance between each vertex in the virtual space based on the calculated 3D coordinates. Since the ray-casting produces 3D coordinates in absolute scale the dimensions of the bag 562 may then be calculated straightforwardly based on the absolute distance between the 3D coordinates of each vertex.

Advantageously, compared with techniques for measuring objects using point-cloud data, only a single surface (the ground plane) needs to be detected in order to accurately measure the dimensions of an item of baggage.

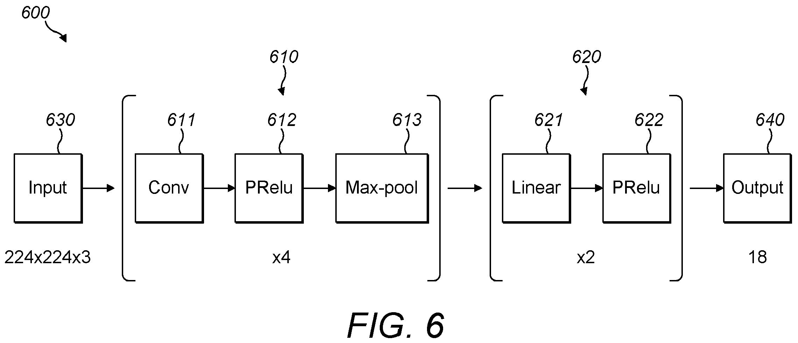

Figure 6 shows a schematic diagram of an example architecture 600 for the neural network 212. The use of the neural network 212 has several advantages compared with using standard monocular 3D object detection techniques to detect and identify articles of baggage. Known monocular 3D bounding box detection techniques are designed for very specific applications, such as autonomous driving, and so have severe limitations for more general use. First, these known techniques only support a small range of angles where an object can be identified. Second, these techniques assume an average size of each class of object - for example a car may have an assumed average length of 2m. Third, monocular 3D object detection techniques lose depth information that makes accurate measurement impossible. Finally, known techniques are only able to detect the exact object with which they are trained and are unable to generalize to identify unusual or different shaped objects in the same classification.

In preferred embodiments the neural network comprises six layers: four convolutional layers 610 and two fully connected layers 620. Each of the four convolutional layers 610 includes one normalization layer 611, one nonlinear activation function (PReLU) 612, and one max-pooling layer 613.

The convolution layers extract the high-level features from an image, such as edges, colour, and gradient orientation. The max pooling layer reduces the spatial size of the image, extracts dominant features within the image, and suppresses noise within the image. Each of the two fully connected layers 620 comprises one linear layer 621, and one nonlinear activation function (PReLU) 622.

In a preferred embodiment, the neural network is designed based on a modified version of the known AlexNet deep neural network, whereby the final PReLU layer 622 is modified to provide an output of 18 floating point numbers, which corresponds to an x,y coordinate pair for each of the 9 key points for each image as described above. Thus, in preferred embodiments the neural network 212 is provided with bag images as an input 630 and provides an output 640 of 18 numbers corresponding to the 2D pixel locations of the 8 vertices and centroid described above. In preferred embodiments, the input bag images have an image size of 224x224 pixels and have three colour channels, as shown in Figure 6.

The location of hidden corners can be determined because the neural network learns to predict the position of each corner based training data used to train the neural network. In particular, the training data set includes labels that include the x-y pixel coordinates of all 9 key points described above, regardless of whether each corner is visible to the camera or not. Therefore the neural network is always able to predict the position of the corners of the bag based on this learned understanding of where the corners of the bag are expected to be.

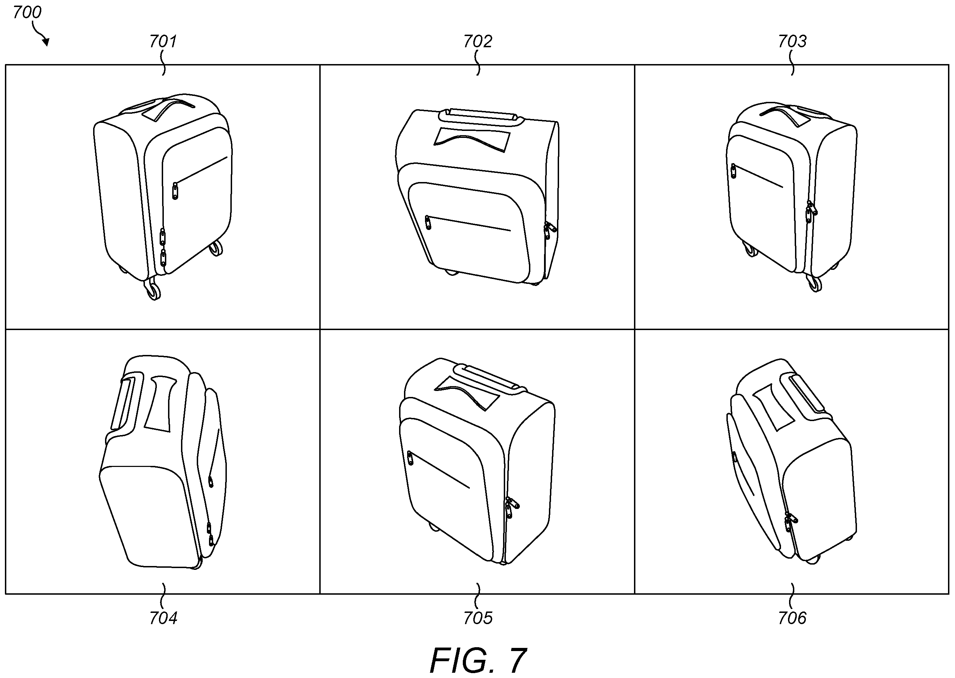

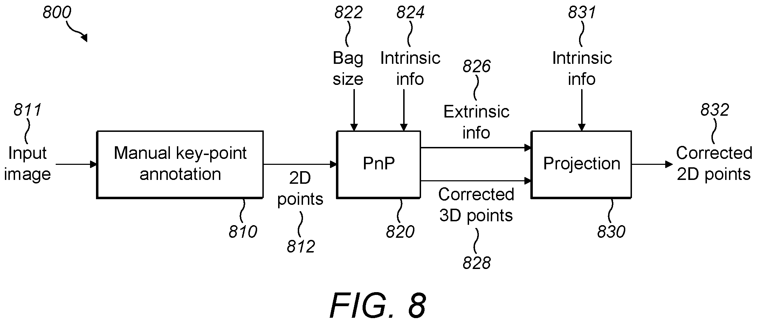

Figure 7 shows images from an example training data set 700 used to train the neural network. A preliminary training bag dataset is prepared and annotated in order to train and evaluate the bag detection algorithm. For each bag, 300 images under different views and different lighting are collected. Figure 7 shows six example images 701-706 of a single bag that may be used to train the bag detection algorithm. The key points determined by the neural network 212 may be refined or adjusted in order to more accurately determine the dimensions of a bag. In some embodiments, this may be achieved manually using a key point annotation tool, which is further described below with reference to figure 8.

Figure 8 shows an example process 800 performed by the system to produce corrected pixel locations for the 9 key points identified during a training phase using manual key point annotation. In a first step 810, a user performs manual key point annotation 810 by interacting with an input image 811 to manually indicate the key points 812 corresponding to the corners and centroid of a bag, as described above. In a second step, the 2D pixel locations 812 associated with these key points are provided to a PnP algorithm 820 along with information relating to the bag size 822 and intrinsic information 824 as described above. The PnP algorithm 820 calculates extrinsic information 826, i.e. the pose of the camera, and corrected 3D coordinates as described above. In a third step 830, the extrinsic information 826 and 3D coordinates 828 are provided to a projection algorithm that converts the 3D pixel locations 828 produced by the PnP algorithm to corrected 2D pixel locations 832 by comparing the pixel locations derived by the PnP algorithm and the pixel locations identified during the manual key point annotation 810. Providing a manual annotation tool enables a supervisor to annotate training data to improve the accuracy of the training data. Embodiments of the invention may enable the system to compare a bounding box fitted by a PnP algorithm with a corrected bounding box manually determined by a supervisor in order for the system to improve the accuracy of the PnP algorithm using known machine learning techniques.

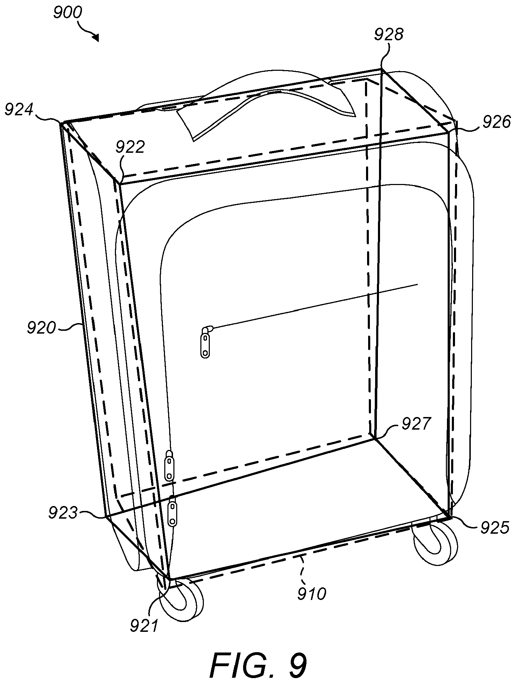

An example of an annotated training image 900 is provided in Figure 9, which shows a comparison between the bounding box defined by a PnP algorithm during a training phase (broken line box 910) and the bounding box defined by a supervisor's manually corrected key points (solid white box 920). In the example shown in Figure 9, the corners of the original bounding box 910 have been manually adjusted to provide corrected key points 921 to 928 corresponding to the correct pixel locations for the corners of the article shown.

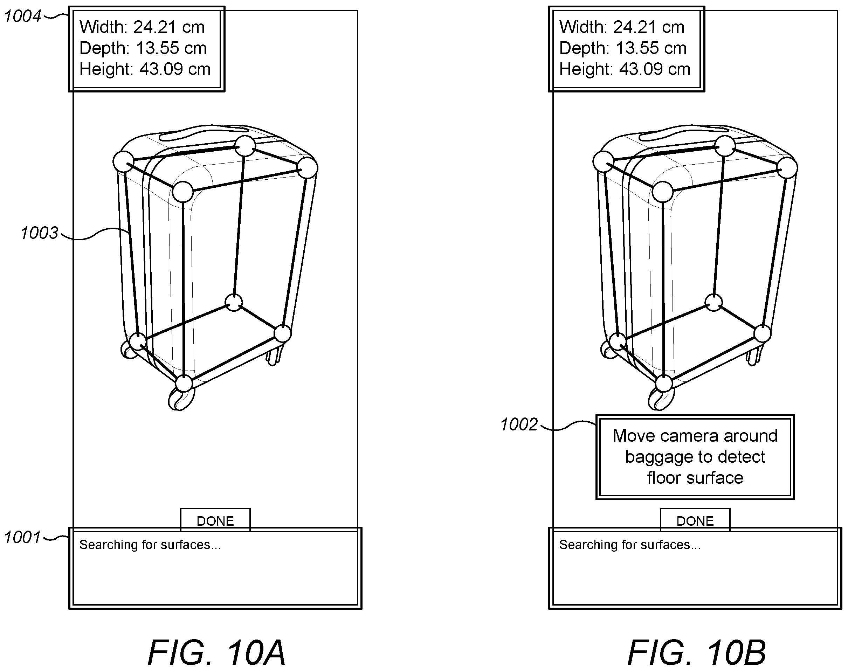

Figures 10A to 10G show an example graphical user interface (GUI) for a mobile application implemented on a mobile device with a camera, which may be used to determine the dimensions of an object. As shown in figures 10A to 10G, the GUI may display various indicia, including information messages, a bounding box, calculated dimensions of the bag based on the bounding box, and buttons to enable a user to interact with the mobile application.

As shown in Figures 10A and 10B, on opening the mobile application, the GUI displays an application status message 1001 that includes text such as "Searching for surfaces..." in order to indicate that the application is gathering data in order to identify the ground surface. In some embodiments, the GUI may display an information message 1002 requesting that the user moves the viewpoint of the camera so that the mobile application may identify the floor surface more easily.

While the application is gathering data, the machine learning algorithm described above may calculate a predicted 3D bounding box based on the available data and the GUI may display the predicted 3D bounding box 1003 and calculated dimensions of the bag 1004 based on the 3D bounding box. As may be seen in Figures 10A and 10B, the calculated dimensions of the bag 1004 are 24.21cm in width, 13.55 cm in depth and 43.09 cm in height. However, the measurements at this point are not accurate until the scale ambiguity has been resolved.

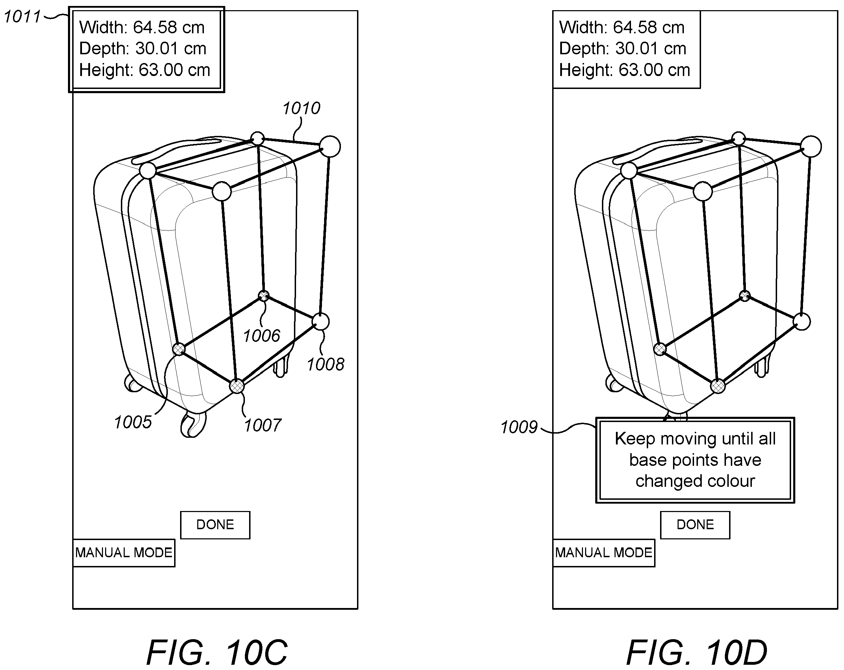

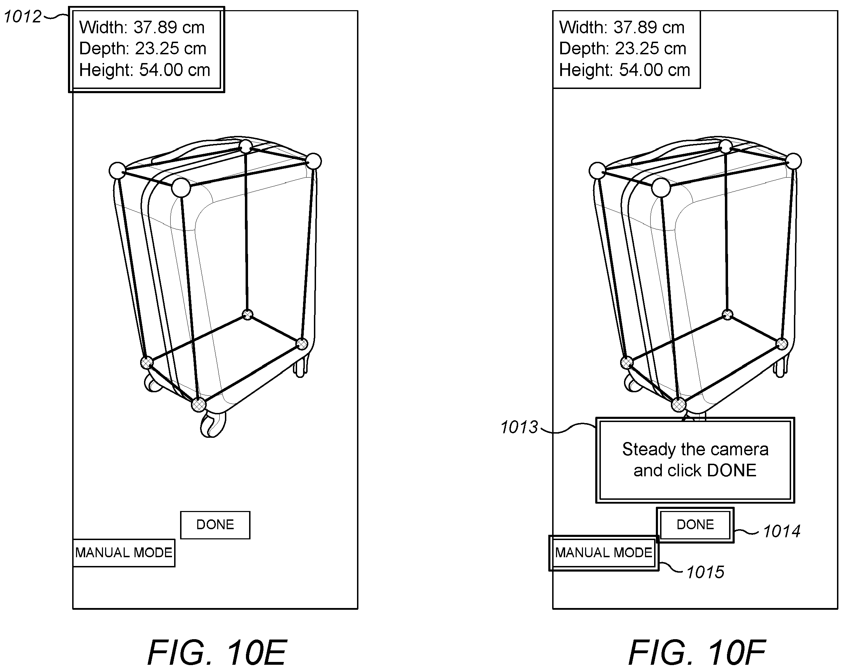

In Figures 10C to 10E, as the user moves the viewpoint of the camera, the mobile application will detect the floor plane and ray cast each base point (1005 - 1008) of the 3D bounding box to the intersection with the floor plane as described above. Once a particular base point of the 3D bounding box has been successfully ray cast to intersect with the floor plane, that base point will darken. In Figures 10C and 10D, base points 1005, 1006 and 1007 have successfully been ray-cast, but further data is required to be able to successfully ray-cast base point 1008. In some embodiments, an information message 1009 may prompt the user to keep moving the mobile device in order to successfully ray-case all four base points, as shown in Figure 10E.

Again, throughout the process the machine learning algorithm described above calculates a predicted 3D bounding box based on the newly available data and the GUI displays an updated predicted 3D bounding box 1010 and calculated dimensions of the bag 1011 based on the 3D bounding box. As may be seen in Figures 10C and 10D, the calculated dimensions of the bag 1011 are 64.58 cm in width, 30.01 cm in depth and 63.00 cm in height. However, once all base points have been ray-cast, the AR library of the mobile application will have gathered sufficient real world coordinates with associated distances relative to the camera in order to resolve any scale ambiguity. Accordingly, the revised calculated dimensions of the bag 1012 shown in Figure 10E of 37.89 cm in width, 23.25 cm in depth and 54.00 cm in height are corrected for scale ambiguity.

Figure 10F shows that, once the mobile application has calculated the dimensions of the bag, the GUI may provide an information message 1013 inviting the user to either continue to gather data using the mobile device until they are satisfied with the location of the 3D bounding box relative to the object being measured. Once satisfied, the user may click on button 1014 to stop the mobile application taking more measurements. Alternatively, the user may click on button 1015 to manually adjust the location of each corner of the 3D bounding box.

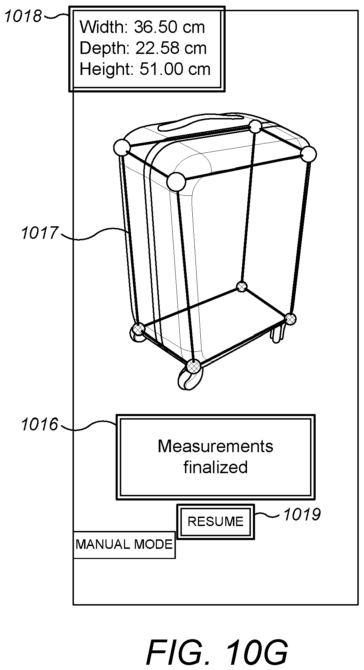

Finally, in Figure 10G, on pressing button 1014 the GUI displays information message 1016 which indicates that the mobile application has stopped taking measurements and that the 3D bounding box 1017 and calculated dimensions of the bag 1018 are finalised. However, the user may resume taking measurements by selecting button 1019 if they believe that the 3D bounding box location is still not completely accurate.

The above detailed description of embodiments of the invention are not intended to be exhaustive or to limit the invention to the precise form disclosed. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

Additionally, it will be noted that although the above description may discuss measuring regular cuboid-shaped objects, it will be appreciated that embodiments of the invention are not limited to measuring such shapes. Where the object to be measured is a non-cuboid rigid, or semi-rigid, shape the above-described methods may be used without modification to provide a cuboid-shaped bounding box that encloses the measured object.

The teachings of the invention provided herein can be applied to other systems, not necessarily the system described above. The elements and acts of the various embodiments described above can be combined to provide further embodiments.

While some embodiments of the inventions have been described, these embodiments have been presented by way of example only, and are not intended to limit the scope of the disclosure. Indeed, the novel methods and systems described herein may be embodied in a variety of other forms; furthermore, various omissions, substitutions and changes in the form of the methods and systems described herein may be made without departing from the spirit of the disclosure.

Embodiments of the invention may be described by the following numbered clauses.

CLAUSES

1. A method (200,500) for measuring the dimensions of an article, the method comprising:

   obtaining image data (211,511) associated with an article;
   identifying (212,512), based on the image data, a plurality of pixel locations associated with the article (221,520);
   calculating (222,532) corresponding 3D coordinates for each of the pixel locations; and
   determining (240,560) the dimensions of the article based on the 3D coordinates.

2. The method of clause 1, wherein the 3D coordinates are calculated using a Perspective-n-Point (PnP) algorithm (222,530) based on camera calibration data.

3. The method of clause 2, wherein the dimensions of the article are determined based on a calculated scaling factor and the 3D coordinates.

4. The method of clause 3, wherein the scaling factor is calculated based on a predetermined height between the camera and the floor, a relative height of the article and a relative depth of the article.

5. The method of clause 4, wherein the relative height of the article and the relative depth of the article are determined based on the calculated 3D coordinates, wherein the height and depth of the article are relative to the width of the article.

6. The method of clause 2, wherein the PnP algorithm determines the pose of a camera that provides the image data based on calibration parameters of the camera.

7. The method of clause 1, wherein the plurality of pixel locations includes a pixel location associated with the centroid of the article.

8. The method of clause 1, further comprising determining (223,540) a plurality of corresponding 2D coordinates based on the calculated 3D coordinates.

9. The method of clause 8, further comprising comparing the plurality of 2D coordinates with the plurality of pixel locations to determine an error (224).

10. The method of clause 9, further comprising identifying (225) a discrete range of acceptable values that define a relative height of the article and a relative depth of the article, wherein the height and depth of the article are relative to the width of the article.

11. The method of clause 10, wherein the discrete range of acceptable values that define the relative height and the relative depth of the article is determined by standard travel industry sizes for articles of baggage.

12. The method of clause 10, further comprising determining a set of 3D coordinates for each possible combination for the relative height and relative depth of the article and determining a corresponding set of 2D coordinates for each set of 3D coordinates.

13. The method of clause 12, further comprising identifying an optimum set of 3D coordinates based on a least-squares analysis of the error between the plurality of pixel locations and each set of 2D coordinates.

14. The method of clause 13, wherein the relative height and relative depth of the article associated with the optimum 3D coordinates are used as relative size parameters.

15. The method of clause 1, wherein the 3D coordinates are calculated using a ray-casting algorithm (500) in an augmented reality environment.

16. The method of clause 15, wherein the dimensions of the article are determined by calculating (550) the distance between 3D coordinates in the AR environment.

17. The method of clause 15, wherein the ray-casting algorithm includes simultaneous localisation and mapping techniques.

18. The method of clause 1, wherein each of the pixel locations corresponds to a respective corner of the article.

19. The method of clause 1, further comprising generating a bounding box based on the 3D coordinates.

20. The method of clause 19, wherein the bounding box is a cuboid defined by the 3D coordinates of the pixel locations and wherein the bounding box approximates the dimensions of the article.

21. The method of clause 1, wherein the image data is obtained from a single image of the article.

22. The method of clause 1, wherein each of the plurality of pixel locations is identified using a neural network.

23. The method of clause 1, wherein the article is a bag in an airport environment and further comprising calculating a volume of carry-on baggage based on the dimensions of one or more articles associated with checked-in passengers intending to board an aircraft, identifying the total cabin storage capacity of the aircraft, and comparing the volume of carry-on baggage with the total cabin storage capacity to identify a remaining cabin storage capacity for the aircraft.

24. The method of clause 1, further comprising sending a notification if the remaining cabin storage capacity falls below a threshold value.

25. The method of clause 1, further comprising a training phase wherein an annotation tool (800) is used to train a neural network to identify the plurality of pixel locations associated with the article (832), wherein one or more of the pixel locations may be identified manually (810) with the annotation tool.

26. A system (100) for measuring the dimensions of an article, the system comprising:

a camera (110) configured to obtain image data associated with an article;
a neural network (112) configured to identify, based on the image data, a plurality of pixel locations associated with the article; and
a processor configured to calculate corresponding 3D coordinates for each of the pixel locations, and further configured to determine the dimensions of the article based on the 3D coordinates.

27. The system of clause 26, wherein the location of the camera is fixed.

28. The system of clause 26, wherein the processor is implemented on an edge device.

29. The system of clause 26, wherein the camera and the processor are located on a mobile device.

30. The system of clause 26, further comprising an airport operation database (130) and common use terminal equipment system (140).

**Claims**

1. A method (200,500) for measuring the dimensions of an article, the method comprising:

   obtaining image data (211,511) associated with an article;
   identifying (212,512), based on the image data, a plurality of pixel locations associated with the article (221,520);
   calculating (222,532) corresponding 3D coordinates for each of the pixel locations; and
   determining (240,560) the dimensions of the article based on the 3D coordinates.

2. The method of claim 1, wherein the 3D coordinates are calculated using a Perspective-n-Point (PnP) algorithm (222,530) based on camera calibration data.

3. The method of claim 2, wherein the dimensions of the article are determined based on a calculated scaling factor and the 3D coordinates, preferably wherein the PnP algorithm determines the pose of a camera that provides the image data based on calibration parameters of the camera, preferably wherein the scaling factor is calculated based on a predetermined height between the camera and the floor, a relative height of the article and a relative depth of the article, and preferably wherein the relative height of the article and the relative depth of the article are determined based on the calculated 3D coordinates, the height and depth of the article being relative to the width of the article.

4. The method of claim 1, wherein the plurality of pixel locations includes a pixel location associated with the centroid of the article.

5. The method of claim 1, further comprising determining (223,540) a plurality of corresponding 2D coordinates based on the calculated 3D coordinates, preferably further comprising comparing the plurality of 2D coordinates with the plurality of pixel locations to determine an error (224), preferably further comprising identifying (225) a discrete range of acceptable values that define a relative height of the article and a relative depth of the article, wherein the height and depth of the article are relative to the width of the article, preferably wherein the discrete range of acceptable values that define the relative height and the relative depth of the article is determined by standard travel industry sizes for articles of baggage, preferably further comprising determining a set of 3D coordinates for each possible combination for the relative height and relative depth of the article and determining a corresponding set of 2D coordinates for each set of 3D coordinates, preferably further comprising identifying an optimum set of 3D coordinates based on a least-squares analysis of the error between the plurality of pixel locations and each set of 2D coordinates, and preferably wherein the relative height and relative depth of the article associated with the optimum 3D coordinates are used as relative size parameters.

6. The method of claim 1, wherein the 3D coordinates are calculated using a ray-casting algorithm (500) in an augmented reality environment.

7. The method of claim 5, wherein the dimensions of the article are determined by calculating (550) the distance between 3D coordinates in the AR environment, and preferably wherein the ray-casting algorithm includes simultaneous localisation and mapping techniques.

8. The method of claim 1, wherein each of the pixel locations corresponds to a respective corner of the article, or further comprising generating a bounding box based on the 3D coordinates, preferably wherein the bounding box is a cuboid defined by the 3D coordinates of the pixel locations and preferably wherein the bounding box approximates the dimensions of the article.

9. The method of claim 1, wherein the image data is obtained from a single image of the article, or wherein each of the plurality of pixel locations is identified using a neural network.

10. The method of claim 1, wherein the article is a bag in an airport environment and further comprising calculating a volume of carry-on baggage based on the dimensions of one or more articles associated with checked-in passengers intending to board an aircraft, identifying the total cabin storage capacity of the aircraft, and comparing the volume of carry-on baggage with the total cabin storage capacity to identify a remaining cabin storage capacity for the aircraft.

11. The method of claim 1, further comprising sending a notification if the remaining cabin storage capacity falls below a threshold value.

**12.** The method of claim 1, further comprising a training phase wherein an annotation tool (800) is used to train a neural network to identify the plurality of pixel locations associated with the article (832), wherein one or more of the pixel locations may be identified manually (810) with the annotation tool.

**13.** A system (100) for measuring the dimensions of an article, the system comprising:

a camera (110) configured to obtain image data associated with an article;
a neural network (112) configured to identify, based on the image data, a plurality of pixel locations associated with the article; and
a processor configured to calculate corresponding 3D coordinates for each of the pixel locations, and further configured to determine the dimensions of the article based on the 3D coordinates.

**14.** The system of claim 13, wherein the location of the camera is fixed, preferably wherein the processor is implemented on an edge device.

**15.** The system of claim 13, wherein the camera and the processor are located on a mobile device, preferably further comprising an airport operation database (130) and common use terminal equipment system (140).

FIG. 1

EP 4 181 064 A1

FIG. 2

FIG. 3

EP 4 181 064 A1

FIG. 4

EP 4 181 064 A1

*FIG. 5*

EP 4 181 064 A1

EP 4 181 064 A1

600

610

620

630    611    612    613    621    622    640

| Input | | Conv | → | PRelu | → | Max-pool | | → | | Linear | → | PRelu | | → | Output |

224x224x3    x4    x2    18

## FIG. 6

FIG. 7

*FIG. 8*

811 Input image

800

810 Manual key-point annotation

812 2D points

822 Bag size

824 Intrinsic info

826 Extrinsic info

820 PnP

828 Corrected 3D points

831 Intrinsic info

830 Projection

832 Corrected 2D points

FIG. 9

EP 4 181 064 A1

**FIG. 10A**

**FIG. 10B**

Width: 64.58 cm
Depth: 30.01 cm
Height: 63.00 cm

Keep moving until all base points have changed colour

DONE

MANUAL MODE

1009

*FIG. 10D*

1010
1008
1006
1007
1005
1011

Width: 64.58 cm
Depth: 30.01 cm
Height: 63.00 cm

DONE

MANUAL MODE

*FIG. 10C*

**FIG. 10E**

**FIG. 10F**

EP 4 181 064 A1

*FIG. 10G*

Europäisches
Patentamt

European
Patent Office

Office européen
des brevets

# EUROPEAN SEARCH REPORT

**Application Number**

EP 21 20 8064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 846 503 B (CHINESE ACAD INST AUTOMATION) 28 September 2011 (2011-09-28) * abstract * * paragraphs [0013] – [0029], [0058], [0051] * | 1-5,8-15 | INV. G06T7/62 G06T7/73 |
| X | EP 3 460 385 A1 (HANGZHOU HIKROBOT TECH CO LTD [CN]) 27 March 2019 (2019-03-27) * claim 1 * | 1,8,13 | |
| A | XU LING-YI ET AL: "A new monocular vision measurement method to estimate 3D positions of objects on floor", INTERNATIONAL JOURNAL OF AUTOMATION AND COMPUTING, ZHONGGUO KEXUE ZAZHISHE, CN, vol. 14, no. 2, 21 February 2017 (2017-02-21), pages 159-168, XP036200713, ISSN: 1476-8186, DOI: 10.1007/S11633-016-1047-6 [retrieved on 2017-02-21] * the whole document * | 1-15 | |
| A | KIM SEONG-HEUM ET AL: "A Survey on Deep Learning Based Methods and Datasets for Monocular 3D Object Detection", ELECTRONICS, vol. 10, no. 4, 22 February 2021 (2021-02-22), page 517, XP55916801, DOI: 10.3390/electronics10040517 * abstract; figures 1, 10 * * page 13, paragraph 4 * * section "4.2.2. 2D-3D Correspondences"; pages 15-16 * * page 17, paragraph 4 * | 1-15 | TECHNICAL FIELDS SEARCHED (IPC) G06T |

The present search report has been drawn up for all claims

| Place of search | Date of completion of the search | Examiner |
|---|---|---|
| Munich | 2 May 2022 | Rodes Arnau, Isabel |

EPO FORM 1503 03.82 (P04C01)

3

## ANNEX TO THE EUROPEAN SEARCH REPORT
## ON EUROPEAN PATENT APPLICATION NO.

EP 21 20 8064

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2022

| Patent document cited in search report | | Publication date | Patent family member(s) | | | Publication date |
|---|---|---|---|---|---|---|
| CN 101846503 | B | 28-09-2011 | NONE | | | |
| EP 3460385 | A1 | 27-03-2019 | CN | 107388960 | A | 24-11-2017 |
| | | | EP | 3460385 | A1 | 27-03-2019 |
| | | | US | 2019139251 | A1 | 09-05-2019 |
| | | | WO | 2017197988 | A1 | 23-11-2017 |

For more details about this annex : see Official Journal of the European Patent Office, No. 12/82

**EP 4 181 064 A1**

**Patent documents cited in the description**

- US 20200065988 A1